# FASCICULE DE BREVET EUROPEEN

(11) **EP 0 867 117 B1**
(45) Date de publication et mention de la délivrance du brevet: **25.09.2002**
(21) Numéro de dépôt: 97200882.5
(22) Date de dépôt: 25.03.1997
(51) Int. Cl.: A21D 13/00, A21D 13/08, A21C 15/00

(54) **Barquettes de céréale garnies**
Gefüllte Schale auf Basis von Getreide
Filled cereal barquettes

(43) Date de publication de la demande: 30.09.1998
(73) Titulaire: SOCIETE DES PRODUITS NESTLE S.A., 1800 Vevey (CH)
(72) Inventeur: Heck, Ernst, 1302 Vufflens-La-Ville (CH); Deutsch, Roman, 1095 Lutry (CH); Desjardins, Jean-Jacques, 1026 Denges (CH); Horisberger, Jean, 1024 Ecublens (CH)
(74) Mandataire: Wavre, Claude-Alain

(56) Documents cités:
- WO-A-90/01877
- GB-A- 2 168 233
- US-A- 4 630 426
- US-A- 5 298 273

## Description

La présente invention a pour objet un procédé de préparation de barquettes de céréale garnies et une installation pour la mise en oeuvre du procédé.

EP0638239 (F. Paquier) décrit une machine de fabrication industrielle de barquettes ingérables destinées à contenir des aliments, la machine effectuant la découpe de morceaux individuels de pâte dans une abaisse éventuellement farinée, la pose de ces morceaux sur un relief de moulage et le transfert vers un four de cuisson.

EP0293552 (O. Nockemann) décrit un procédé de préparation de barquettes de céréale garnies, dans lequel on prépare par formage des barquettes de céréale cuites ou déshydratées à parois étanches et relativement élastiques que l'on peut garnir soit d'une préparation culinaire sous forme subdivisée soit d'une préparation culinaire prémoulée adaptée à la taille et à la forme de l'intérieur de la barquette, notamment une préparation congelée destinée à être réchauffée aux microondes après avoir été glissée dans la barquette.

EP0487757 (SOCIETE DES PRODUITS NESTLE S.A.) décrit un procédé de découpage d'un produit alimentaire cuit coextrudé comportant une enveloppe externe à base de céréale et une garniture interne quelconque, dans lequel le produit est découpé par matriçage entre deux surfaces cylindriques alors que l'enveloppe externe est encore thermoplastique après cuisson coextrusion.

La présente invention a pour but de proposer un procédé de préparation de barquettes de céréale garnies en continu qui permette l'économie de toute étape ultérieure de cuisson ou de séchage.

A cet effet, dans le procédé de préparation de barquettes de céréale garnies selon la présente invention, on confectionne par cuisson-extrusion au moins une bande de céréale plate, on forme par pressage à chaud au moins une rangée de cavités dans la bande extrudée encore thermoplastique, on pratique des incisions transversales dans la bande entre les cavités, on introduit une garniture alimentaire dans les cavités, on découpe la bande longitudinalement tout en coupant les extrémités des incisions transversales, et l'on recueille les barquettes garnies individuelles ainsi obtenues.

De même, l'installation pour la mise en oeuvre du procédé selon la présente invention comprend un dispositif de cuisson-extrusion, un dispositif de formage à chaud, un dispositif d'incisage transversal, un dispositif de garnissage et un dispositif de découpage longitudinal. De préférence, le dispositif de cuisson-extrusion comprend une extrudeuse bivis dont la filière présente un ou plusieurs orifices de sortie en forme de fente.

De manière surprenante, le présent procédé et la présente installation permettent effectivement l'économie de toute étape ultérieure de cuisson ou de séchage. En effet, la bande de céréale plate est déjà cuite au moment où on la forme par pressage à chaud et les barquettes ainsi thermoformées sont immédiatement remplies et prêtes à être consommées sans qu'aucune opération ultérieure de cuisson ou séchage ne soit plus requise.

Dans le présent exposé, l'expression "bande de céréale plate" est à comprendre comme une bande de produit plat à base de céréale, notamment un produit à base de farine ou semoule de céréale expansé.

Pour mettre en oeuvre le présent procédé, on peut confectionner la bande de céréale plate en cuisant-extrudant à 120-200°C sous 6-15 MPa durant 10-60 s dans une extrudeuse bivis un mélange ou pâte comprenant, en parties en poids, 70-90 parties de farine de céréale, 1-15 parties de saccharose, 1-5 parties d'huile ou graisse et 0,5-1,2 parties de chlorure de sodium auquel on peut ajouter jusqu'à 15 parties d'eau, par exemple.

De préférence, on utilise comme céréale le blé, le maïs, le seigle et/ou l'orge. On peut y incorporer jusqu'à 10 parties d'avoine pour obtenir un produit plus léger, par exemple.

On peut utiliser toutes sortes d'huiles ou graisses végétales, notamment de l'huile de palme hydrogénée ou de la graisse de coco, par exemple.

On peut ajouter au mélange jusqu'à 3 parties de dextrose ou de fructose pour faciliter le découpage, par exemple.

On peut ajouter au mélange jusqu'à 0,5 partie de carbonate de calcium pour favoriser l'expansion de la bande cuite-extrudée, par exemple.

On peut ajouter au mélange jusqu'à 8 parties d'isolat ou de concentrat de protéines, notamment de protéines de soya pour faciliter la coagulation du produit, par exemple.

Le mélange peut présenter une teneur en eau de 6-14% avant addition d'eau. On peut ajouter jusqu'à 15 parties d'eau de manière que le mélange présente une teneur en eau de 10-25% avant cuisson-extrusion, de 8-12% après cuisson-extrusion et expansion, et de 3-6% après formage à chaud, par exemple.

On peut extruder le mélange cuit en le faisant passer au travers d'une filière présentant au moins un orifice de sortie en forme de fente de 3-10 cm de longueur et 0,4-1,5 mm de largeur, par exemple. La bande extrudée peut alors présenter une épaisseur de environ 2-7,5 mm suite à son expansion après extrusion au travers de cette filière, par exemple.

On peut former les cavités par pressage de la bande entre les parties mâles et femelles de moules à surfaces lisses chauffées à une température de 60-90°C, par exemple. Des parties mâles de moules à surfaces lisses peuvent être prévues à la surface d'un cylindre supérieur et des parties femelles correspondantes des moules à surface lisse peuvent être prévues à la surface d'un cylindre inférieur d'un dispositif de formage comprenant un ou plusieurs jeux de cylindres parallèles superposés tournant en sens contraires. Si les cavités à former doivent présenter une certaine profondeur, il peut être préférable de les former en plusieurs passages entre les parties mâles et femelles de moules de profondeur croissante que l'on peut prévoir sur plusieurs jeux de cylindres successifs. Il est possible également de prévoir d'expulser les barquettes des moules sous l'effet d'impulsions d'air projeté par un trou prévu au centre des parties femelles et/ou mâles des moules, au moment où ces parties mâles et femelles se séparent les unes des autres.

La bande pouvant présenter à la sortie de l'extrudeuse une température de environ 80-120°C, on peut recommander de la faire passer, à distance aussi réduite que possible de la filière, entre un premier jeu de cylindres de formage chauffés à une température d'au moins 80°C, un deuxième ou plusieurs jeux de cylindres de formage suivants pouvant être chauffés à des températures moindres, voire n'être pas chauffés du tout, et un dernier jeu de cylindres de formage pouvant même être refroidi, par exemple.

On peut ainsi former des cavités présentant une profondeur de 0,5-3 cm et un fond généralement plat de 4 à 30 cm2 dont la forme peut être prévue en sorte que la barquette soit optiquement attractive tout en limitant autant que possible le volume des chutes résultant du découpage de la bande, chutes que l'on recycle de préférence en début de processus de cuisson-extrusion ou dans la garniture, après mouture adéquate, par exemple.

On peut alors introduire une garniture dans les cavités, en particulier une garniture salée, notamment une garniture au fromage ou à la viande, ou une garniture sucrée, notamment une garniture aux amandes, noisettes, céréales expansées, flocons de céréales, chocolat et/ou confiture, par exemple. La garniture peut être introduite en une seule opération ou par couches successives de compositions différentes, par exemple.

Le choix de la composition précise de la pâte de la barquette de céréale peut être arrêté en fonction du choix de la composition de la garniture. Cependant, si la garniture est trop humide, à savoir qu'elle présente un Aw, notamment un Aw supérieur à 0,5 tel que l'on puisse craindre une migration de l'humidité dans la pâte, on peut prévoir d'imperméabiliser la cavité de la barquette en pulvérisant dedans une solution d'amidon et en la faisant passer sous un rayonnement infrarouge, par exemple. On peut également prévoir un enrobage complet de la barquette par trempage ou glaçage, par exemple.

Après introduction de la garniture dans les cavités, on peut fermer la barquette avec un couvercle de pâte ou avec une couche hermétique telle qu'une couche de sucre ou de chocolat, par exemple.

On peut pratiquer les incisions transversales dans la bande entre les cavités à tout moment choisi entre l'instant où la bande sort de la filière et l'instant où l'on découpe la bande longitudinalement tout en coupant les extrémités des incisions transversales juste avant de recueillir les barquettes garnies individuelles obtenues.

L'installation pour la mise en oeuvre du procédé comprend donc un dispositif de cuisson-extrusion, un dispositif de formage à chaud, un dispositif d'incisage transversal, un dispositif de garnissage et un dispositif de découpage longitudinal, le dispositif de cuisson-extrusion comprenant de préférence une extrudeuse bivis dont la filière présente un ou plusieurs orifices de sortie en forme de fente.

Le dispositif de formage à chaud comprend de préférence un ou plusieurs jeux de cylindres parallèles superposés tournant en sens contraires, des parties mâles de moules à surfaces lisses étant prévues à la surface d'un cylindre supérieur et des parties femelles correspondantes des moules à surface lisse étant prévues à la surface d'un cylindre inférieur. Ces cylindres peuvent être chauffés par circulation d'un fluide de chauffage à l'intérieur des cylindres, la chaleur étant transmise aux parties mâles et femelles des moules par conduction thermique du matériau de construction des cylindres, par exemple. Un dernier jeu de cylindres peut même être refroidi par circulation d'un fluide de refroidissement, par exemple.

Le dispositif d'incisage transversal peut comprendre deux cylindres parallèles superposés tournant en sens contraire, la surface d'un cylindre supérieur pouvant présenter des couteaux transversaux et la surface d'un cylindre inférieur pouvant présenter des cavités de réception et transport, par exemple.

Le dispositif de garnissage peut comprendre une trémie d'alimentation, des rouleaux de distribution et des moyens d'égalisation, par exemple.

Le dispositif de découpage longitudinal peut comprendre deux cylindres parallèles superposés tournant en sens contraires, la surface d'un cylindre supérieur pouvant présenter des couteaux longitudinaux circulaires et la surface d'un cylindre inférieur pouvant présenter des cavités de réception et transport, par exemple.

L'installation peut comprendre en outre un dispositif de pulvérisation en aval du dispositif de remplissage et/ou un tunnel de refroidissement en amont du dispositif de découpage longitudinal, par exemple.

L'installation selon la présente invention est décrite ci-après en référence au dessin annexé à titre d'exemple, dans lequel:
- la figure 1 représente schématiquement une vue de côté d'une forme d'exécution de l'installation,
- la figure 2 représente schématiquement une vue de dessus de la forme d'exécution de l'installation représentée à la figure 1, et
- la figure 3 représente une vue de dessus de diverses formes des barquettes découpées dans la bande.

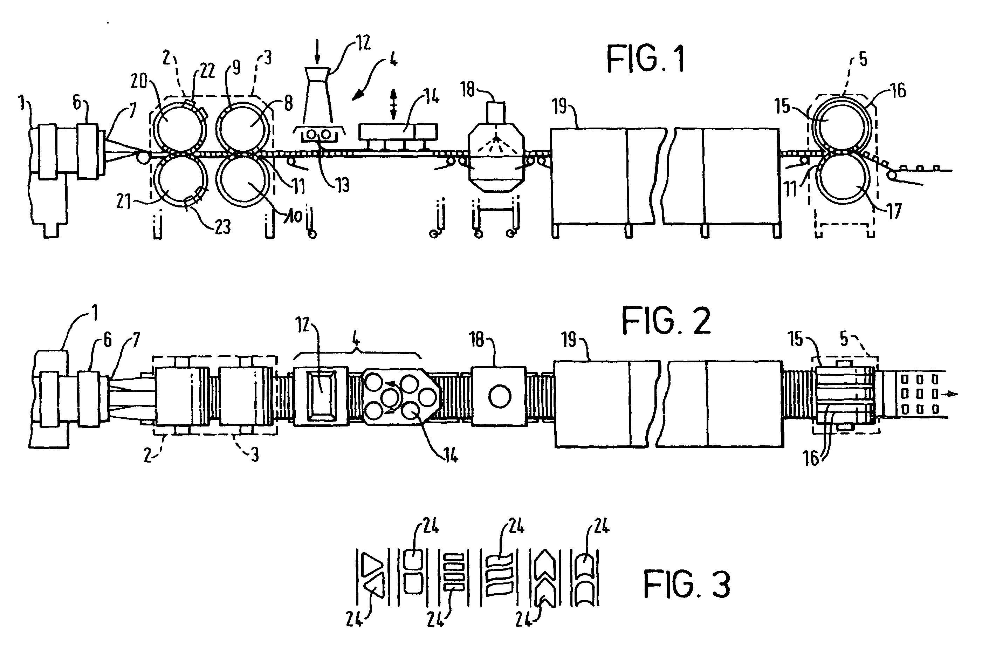

Dans la forme d'exécution représentée aux figures 1 et 2, la présente installation comprend un dispositif de cuisson-extrusion (1), un dispositif de formage à chaud (2), un dispositif d'incisage transversal (3), un dispositif de garnissage (4) et un dispositif de découpage longitudinal (5).

Le dispositif de cuisson-extrusion comprend une extrudeuse bivis (1) dont la filière (6) présente trois orifices de sortie (7) en forme de fentes.

Le dispositif de formage (2) comprend un jeu de cylindres parallèles superposés (20, 21) tournant en sens contraires, des parties mâles (22) de moules à surfaces lisses étant prévues à la surface d'un cylindre supérieur (20) et des parties femelles (23) correspondantes des moules à surface lisse étant prévues à la surface d'un cylindre inférieur (21).

Le dispositif d'incisage transversal (3) comprend deux cylindres parallèles superposés tournant en sens contraire, la surface d'un cylindre supérieur (8) présentant des couteaux transversaux (9) et la surface d'un cylindre inférieur (10) présentant des cavités de réception et transport (11).

Le dispositif de garnissage (4) comprend une trémie d'alimentation (12), des rouleaux de distribution (13) et des moyens d'égalisation (14).

Le dispositif de découpage longitudinal (5) comprend deux cylindres parallèles superposés tournant en sens contraires, la surface d'un cylindre supérieur (15) présentant des couteaux longitudinaux (16) et la surface d'un cylindre inférieur (17) présentant des cavités de réception et transport (11).

L'installation comprend en outre un dispositif de pulvérisation (18) en aval du dispositif de garnissage (4) et un tunnel de refroidissement (19) en amont du dispositif de découpage longitudinal (5).

Comme on l'a représenté à la figure 3 (on peut imaginer que les bandes respectives défilent de bas en haut de la figure), on peut découper dans la bande des ébauches (24) dont la forme triangulaire, carrée, rectangulaire, en S, en chevrons ou en arcs de cercle, par exemple, peut être prévue en sorte que les barquettes soient optiquement attractives tout en limitant autant que possible le volume des chutes résultant du découpage de la bande.

Le procédé selon la présente invention est décrit plus en détails dans les exemples ci-après présentés à titre d'illustration et dans lesquels les pourcentages et parties sont donnés en poids.

### Exemple 1

A l'aide d'une installation semblable à celle représentée aux figures 1 et 2 on prépare des barquettes légèrement évasées présentant une profondeur de 2 cm et un fond rectangulaire de 2x7 cm2.

Dans l'extrudeuse bivis de cette installation, le temps de séjour du mélange est de 30 s, la température de 180°C et la pression de 8 MPa. La filière présente trois orifices de sortie en forme de fentes de 7,5 cm de longueur et 0,9 mm de largeur.

Le dispositif de formage comprend trois jeux de cylindres successifs sur lesquels les profils présentent des hauteurs et profondeurs respectives de 1, 1,5 et 2 cm. Le premier jeu de cylindres est chauffé à 80°C, le second jeu de cylindres est chauffé à 60°C et le troisième n'est pas chauffé.

L'extrudeuse est alimentée avec un mélange comprenant 87,7 parties de farine de blé, 10,7 parties de farine de seigle blanc, 5 parties d'isolat de protéines de soya, 2,8 parties de saccharose, 1,9 parties d'huile de maïs, 0,85 partie de chlorure de sodium, 0,48 partie de carbonate de calcium et 0,28 partie de dextrose auxquelles sont ajoutées 4,7 parties d'eau. Le mélange présente ainsi une teneur en eau de 18,2% à l'entrée du dispositif, 8,9% après expansion à la sortie de l'extrudeuse et 3% après formage à chaud.

La bande présente une épaisseur de 4,5 mm après expansion, l'épaisseur des parois de la barquette formée étant de environ 1,5 mm.

Les barquettes sont garnies d'une préparation à base de fromage qui présente un Aw de 0,5 comparable à celui de leurs parois.

### Exemple 2

On procède de manière semblable à celle décrite à l'exemple 1, à l'exception du fait que l'extrudeuse est alimentée avec un mélange comprenant 77,3 parties de farine de blé, 9,45 parties de farine de seigle blanc, 4,9 parties d'isolat de protéines de soya, 11,9 parties de saccharose, 2 parties d'huile de maïs, 0,75 partie de chlorure de sodium, 0,42 partie de carbonate de calcium et 2 parties de dextrose auxquelles sont ajoutées 5,5 parties d'eau. Le mélange présente ainsi une teneur en eau de 18% à l'entrée du dispositif, 9,1% après expansion à la sortie de l'extrudeuse et 4% après formage à chaud.

On garnit les barquettes avec une première couche de noisettes grossièrement concassées, une deuxième couche de crème noisette-chocolat et une troisième couche de grains de riz expansés. On ferme les barquettes avec une couche de chocolat.

### Exemple 3

On procède de la manière décrite à l'exemple 2 pour l'obtention des barquettes que l'on garnit alors avec un mélange fraise-noisettes sur fond de caramel avant de les enrober de chocolat.

## Revendications

1. Procédé de préparation de barquettes de céréale garnies, dans lequel on confectionne par cuisson-extrusion au moins une bande de céréale plate, on forme par pressage à chaud au moins une rangée de cavités dans la bande extrudée encore thermoplastique, on pratique des incisions transversales dans la bande entre les cavités, on introduit une garniture alimentaire dans les cavités, on découpe la bande longitudinalement tout en coupant les extrémités des incisions transversales, et l'on recueille les barquettes garnies individuelles ainsi obtenues.

2. Procédé selon la revendication 1, dans lequel on confectionne la bande de céréale plate en cuisant-extrudant à 120-200°C sous 6-15 MPa durant 10-60 s un mélange comprenant, en parties en poids, 70-90 parties de farine de céréale, 1-15 parties de saccharose, 1-5 parties d'huile ou graisse et 0,5-1,2 parties de chlorure de sodium auquel on ajoute jusqu'à 15 parties d'eau.

3. Procédé selon la revendication 1, dans lequel on extrude le mélange cuit en le faisant passer au travers d'une filière présentant au moins un orifice de sortie en forme de fente de 3-10 cm de longueur et 0,4-1,5 mm de largeur.

4. Procédé selon la revendication 1, dans lequel les cavités sont formées par pressage de la bande entre les parties mâles et femelles de moules à surfaces lisses chauffées à une température de 60-90°C.

5. Procédé selon la revendication 1, dans lequel les cavités présentent une profondeur de 0,5-3 cm et un fond généralement plat de 4-30 cm2.

6. Procédé selon la revendication 1, dans lequel la garniture alimentaire est une garniture salée, notamment une garniture au fromage ou à la viande, ou une garniture sucrée, notamment une garniture aux amandes, noisettes, céréales expansées, flocons de céréales, chocolat et/ou confiture.

7. Installation pour la mise en oeuvre du procédé selon l'une des revendications 1-6, comprenant un dispositif de cuisson-extrusion (1), un dispositif de formage à chaud (2), un dispositif d'incisage transversal (3), un dispositif de garnissage (4) et un dispositif de découpage longitudinal (5).

8. Installation selon la revendication 7, dans laquelle le dispositif de cuisson-extrusion comprend une extrudeuse bivis (1) dont la filière (6) présente un ou plusieurs orifices de sortie (7) en forme de fente.

9. Installation selon la revendication 7, dans laquelle le dispositif de formage (2) comprend un ou plusieurs jeux de cylindres parallèles superposés (20, 21) tournant en sens contraires, des parties mâles de moules à surfaces lisses étant prévues à la surface d'un cylindre supérieur (20) et des parties femelles correspondantes des moules à surface lisse étant prévues à la surface d'un cylindre inférieur (21).

10. Installation selon la revendication 7, dans laquelle le dispositif d'incisage transversal (3) comprend deux cylindres parallèles superposés tournant en sens contraire, la surface d'un cylindre supérieur (8) présentant des couteaux transversaux (9) et la surface d'un cylindre inférieur (10) présentant des cavités de réception et transport (11).

11. Installation selon la revendication 7, dans laquelle le dispositif de garnissage (4) comprend une trémie d'alimentation (12), des rouleaux de distribution (13) et des moyens d'égalisation (14).

12. Installation selon la revendication 7, dans laquelle le dispositif de découpage longitudinal (5) comprend deux cylindres parallèles superposés tournant en sens contraires, la surface d'un cylindre supérieur (15) présentant des couteaux longitudinaux circulaires (16) et la surface d'un cylindre inférieur (17) présentant des cavités de réception et transport (11).

13. Installation selon la revendication 7, comprenant en outre un dispositif de pulvérisation (18) en aval du dispositif de garnissage (4) et/ou un tunnel de refroidissement (19) en amont du dispositif de découpage longitudinal (5).

## Patentansprüche

1. Verfahren zur Herstellung von gefüllten Barquette-Backwaren aus Getreide, bei dem man mindestens ein flaches Getreideband durch Kochextrusion herstellt, in dem noch thermoplastischen extrudierten Band durch Warmpressen mindestens eine Reihe von Hohlräumen bildet, in dem Band zwischen den Hohlräumen Quereinschnitte herstellt, in die Hohlräume eine Nahrungsmittelfüllung einführt, das Band in Längsrichtung zerschneidet, indem man die Enden der Quereinschnitte schneidet, und die auf diese Weise erhaltenen einzelnen gefüllten Barquette-Backwaren aufnimmt.

2. Verfahren nach Anspruch 1, bei dem man das flache Getreideband herstellt, indem man bei 120-200°C unter 6-15 MPa während 10-60 s eine Mischung kochextrudiert, die, in Gewichtsteilen, aus 70-90 Teilen Getreidemehl, 1-15 Teilen Saccharose, 1-5 Teilen Öl oder Fett und 0,5-1,2 Teilen Natriumchlorid besteht und der man bis zu 15 Teile Wasser zusetzt.

3. Verfahren nach Anspruch 1, bei dem man die gekochte Mischung extrudiert, indem man sie durch eine Düse führt, die mindestens eine Austrittsöffnung in Form eines Schlitzes mit einer Länge von 3-10 cm und einer Breite von 0,4-1,5 mm aufweist.

4. Verfahren nach Anspruch 1, bei dem die Hohlräume durch Pressen des Bandes zwischen den erhabenen und vertieften Teilen von Formen mit glatten Oberflächen geformt werden, die auf eine Temperatur von 60-90°C erwärmt werden.

5. Verfahren nach Anspruch 1, bei dem die Hohlräume eine Tiefe von 0,5-3 cm und einen allgemein flachen Boden von 4-30cm² aufweisen.

6. Verfahren nach Anspruch 1, bei dem die Nahrungsmittelfüllung eine salzige Füllung, insbesondere eine Käse- oder Fleischfüllung, oder eine süße Füllung, insbesondere eine Füllung aus Mandeln, Haselnüssen, expandierten Getreiden, Getreideflocken, Schokolade und/oder Konfitüre, ist.

7. Anlage zur Durchführung des Verfahren nach einem der Ansprüche 1 bis 6, die eine Kochextrusionsvorrichtung (1), eine Warmformvorrichtung (2), eine Quereinschneidevorrichtung (3), eine Füllvorrichtung (4) und eine Längsschneidevorrichtung (5) aufweist.

8. Anlage nach Anspruch 7, bei der die Kochextrusionsvorrichtung aus einem Zweischnecken-Extruder (1) besteht, dessen Düse (6) eine oder mehrere schlitzförmige Austrittsöffnungen (7) aufweist.

9. Anlage nach Anspruch 7, bei der die Formungsvorrichtung (2) aus einem oder mehreren Sätzen von übereinander angeordneten parallelen Walzen (20,21) besteht, die sich in entgegengesetzten Sinnen drehen, wobei auf der Oberfläche eines oberen Zylinders (20) erhabene Formenteile mit glatten Oberflächen vorgesehen sind und auf der Oberfläche einer unteren Walze (21) entsprechende vertiefte Formenteile mit glatter Oberfläche vorgesehen sind.

10. Anlage nach Anspruch 7, bei der die Quereinschneidevorrichtung (3) aus zwei parallelen, übereinander angeordneten Walzen besteht, die sich in einander entgegengesetztem Sinn drehen, wobei die Oberfläche einer oberen Walze (8) Quermesser (9) aufweist und die Oberfläche einer unteren Walze (10) Aufnahme- und Transporthohlräume (11) aufweist.

11. Anlage nach Anspruch 7, bei der die Füllvorrichtung (4) einen Aufgabetrichter (12), Verteilungsrollen (13) und Glättungsmittel (14) aufweist.

12. Anlage nach Anspruch 7, bei der die Längsschneidevorrichtung (5) zwei parallele, übereinander angeordnete Walzen aufweist, die sich in entgegengesetzten Sinnen drehen, wobei die Oberfläche einer oberen Walze (15) kreisförmige Längsmesser (16) aufweist und die Oberfläche einer unteren Walze (17) Aufnahme- und Transporthohlräume (11) aufweist.

13. Anlage nach Anspruch 7, die außerdem eine Sprühvorrichtung (18) stromab der Füllvorrichtung (4) und/oder einen Kühltunnel (19) stromauf der Längsschneidevorrichtung (5) aufweist.

## Claims

1. Method for preparing filled cereal barquettes in which at least one flat cereal strip is produced by extrusion-cooking, at least one row of cavities is formed, by hot pressing, in the still thermoplastic extruded strip, transverse incisions are made in the strip between the cavities, a food filling is introduced into the cavities, the strip is cut up longitudinally while cutting the ends of the transverse incisions, and the individual filled trays obtained in this way are collected.

2. Method according to claim 1, wherein the flat cereal strip is produced by extrusion-cooking at 120-200°C under 6-15 MPa for 10-60 s a mixture comprising, in parts by weight, 70-90 parts of cereal flour, 1-15 parts of sucrose, 1-5 parts of oil or fat and 0.5-1.2 parts of sodium chloride to which up to 15 parts of water are added.

3. Method according to claim 1, wherein the cooked mixture is extruded by passing it through a die having at least one outlet orifice in the form of a slot 3-10 cm long and 0.4-1.5 mm wide.

4. Method according to claim 1, wherein the cavities are formed by pressing the strip between the male and female parts of the moulds with smooth surfaces heated to a temperature of 60-90°C.

5. Method according to claim 1, wherein the cavities have a depth of 0.5-3 cm and a generally flat 4-30 cm² bottom.

6. Method according to claim 1, wherein the food filling is a savoury filling, in particular a cheese or meat filling, or a sweet filling, in particular a filling of almonds, hazelnuts, expanded cereals, cereal flakes, chocolate and/or jam.

7. Installation for implementing the method according to one of claims 1-6, comprising an extrusion-cooking device (1), a hot forming device (2), and a transverse slitting device (3), a filling device (4) and a longitudinal cutting device (5).

8. Installation according to claim 7, wherein the extrusion-cooking device comprises a twin-screw extruder (1) of which the die (6) has one or more outlet orifices (7) in the form of a slot.

9. Installation according to claim 7, wherein the forming device (2) comprises one or more sets of superimposed parallel cylinders (20,21) rotating in opposite directions, male parts of the moulds with smooth surfaces being provided on the surface of an upper cylinder (20) and corresponding female parts of moulds with a smooth surface being provided on the surface of a lower cylinder (21).

10. Installation according to claim 7, wherein the transverse slitting device (3) comprises two superimposed parallel cylinders rotating in opposite directions, the surface of an upper cylinder (8) having transverse knives (9) and the surface of a lower cylinder (10) having receiving and transporting cavities (11).

11. Installation according to claim 7, wherein the filling device (4) comprises a feed hopper (12), distribution rollers (13) and equalizing means (14).

12. Installation according to claim 7, wherein the longitudinal cutting device (5) comprises two superimposed parallel cylinders revolving in opposite directions, the surface of an upper cylinder (15) having circular longitudinal knives (16) and the surface of a lower cylinder (17) having receiving and transporting cavities (11).

13. Installation according to claim 7, additionally comprising a spraying device (18) downstream from the filling device (4) and/or a cooling tunnel (19) upstream from the longitudinal cutting device (5).
